(19) Europäisches Patentamt
European Patent Office
Office européen des brevets

(11) Numéro de publication: **0 090 692**
**B1**

(12) # FASCICULE DE BREVET EUROPEEN

(45) Date de publication du fascicule du brevet: **18.12.85**

(51) Int. Cl.⁴: **C 01 G 23/00**, C 22 B 3/00

(21) Numéro de dépôt: **83400486.3**

(22) Date de dépôt: **10.03.83**

(54) **Procédé de récuperation et de purification d'un acide sulfurique residuaire contenant des sels de titane.**

(30) Priorité: **19.03.82 FR 8204684**

(43) Date de publication de la demande:
**05.10.83 Bulletin 83/40**

(45) Mention de la délivrance du brevet:
**18.12.85 Bulletin 85/51**

(84) Etats contractants désignés:
**BE DE FR GB IT NL**

(56) Documents cités:
**FR - A - 1 322 201**
**US - A - 3 067 010**

**JOURNAL OF INORGANIC & NUCLEAR CHEMISTRY, vol. 42, no. 7, 1980, pages 1033-1036, Pergamon Press Ltd., Oxford, GB. P.H. TEDESCO et al.: "Ti(IV) extraction by tri-n-butylphosphate from sulphuric acid solutions"**
**CHEMICAL ABSTRACTS, vol. 89, no. 26, 25 décembre 1978, page 181, no. 218329y, Columbus, Ohio, USA P.H. TEDESCO et al.: "Study on the feasibility of the recovery of titanium from titanium-containing sands by extraction with tributyl phosphate"**
**CHEMICAL ABSTRACTS, vol. 85, no. 18, 1er novembre 1976, page 253, no. 127612m, Columbus, Ohio, USA L.V. FAVORSKAYA et al.: "Extraction of titanium(IV) and iron(II) by bis(2-ethylhexyl) hydrogen phosphate"**
**CHEMICAL ABSTRACTS, vol. 96, no. 12, mars 1982, page 144, no. 87928n, Columbus, Ohio, USA**
**CHEMICAL ABSTRACTS, vol. 91, no. 10, septembre 1979, page 328, no. 79529q, Columbus, Ohio, USA F. ISLAM et al.: "Solvent extraction separation study of titanium(IV), iron(III), and iron(II) from aqueous solutions with di-2-ethylhexylphosphoric acid in benzene"**

(73) Titulaire: **RHONE-POULENC S.A., 25, quai Paul Doumer, F-92408 Courbevoie (FR)**

(72) Inventeur: **Fitoussi, Richard, 6, rue de Châtillon, F-75014 Paris (FR)**
Inventeur: **Leveque, Alain, 8-10, rue Manin, F-75019 Paris (FR)**
Inventeur: **Sabot, Jean-Louis, 1 quater avenue Lesage, F-78600 Maisons-Laffitte (FR)**

(74) Mandataire: **Dubruc, Philippe et al, RHONE-POULENC RECHERCHES Service Brevets Chimie et Polymères 25, quai Paul-Doumer, F-92408 Courbevoie Cedex (FR)**

(56) Documents cités: (suite)
**CHEMICAL ABSTRACTS, vol. 90, no. 24, juin 1979, page 135, no. 189201p, Columbus, Ohio, USA F. ISLAM et al.: "Separation and recovery of titanium from iron bearing leach liquors by solvent extraction with di-2-ethyl hexyl phosphoric acid"**
**JOURNAL OF INORGANIC & NUCLEAR CHEMISTRY, vol. 40, no. 3, 1978, pages 559-566, Pergamon Press, Oxford, GB. F. ISLAM et al.: "Kinetics of solvent extraction of metal ions with HDEHP-I. Kinetics and mechanism of solvent extraction of Ti(IV) from acidic aqueous solutions with bis-(2-ethyl hexyl) phosphoric acid in benzene"**
**CHEMICAL ABSTRACTS, vol. 90, no. 22, mai 1979, page 350, no. 174062v, Columbus, Ohio, USA V.YU. FILATOV et al.: "Study of the possibility of extractive regeneration of sulfuric acid which is a waste from titanium dioxide production. Communication II. Extraction of titanium from sulfuric acid solutions with some organic solvents"**
**CHEMICAL ABSTRACTS, vol. 77, no. 4, 24 juillet 1972, page 420, no. 25421r, Columbus, Ohio, USA A.V. NAVROTSKAYA et al.: "Kinetics of titanium extraction with diisoamylphosporic acid"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 090 692 B1

ACTORUM AG

**Description**

La présente invention concerne un procédé de traitement d'une phase aqueuse acide contenant des ions sulfate, notamment de l'acide sulfurique et, en outre, des ions titane, fer et notamment fer (II) et éventuellement d'autres impuretés métalliques. En particulier, le procédé de l'invention s'applique au traitement de solutions d'acide sulfurique résiduaire issues notamment d'un procédé au sulfate de production de dioxyde de titane.

On sait, en effet, que l'acide sulfurique est un des produits chimiques les plus utilisés dans l'industrie. Dans de nombreux cas, cet acide est rejeté après usage, ce qui entraîne des problèmes de pollution d'autant plus graves que les quantités d'acide mises en œuvre s'accroissent.

Certains procédés industriels et en particulier le procédé au sulfate de production de dioxyde de titane pigmentaire, produisent en effet de grandes quantités d'acide sulfurique aqueux ayant une concentration en poids comprise entre 10 et 50% et renfermant comme impuretés des sulfates métalliques, tels que les sulfates ferreux et de titane. Cette solution acide peut en outre contenir des quantités importantes d'autres sels métalliques.

Ces sels métalliques sont en effet formés comme sous-produits, par exemple dans la production de $TiO_2$, lors de l'attaque par l'acide sulfurique de la matière première titanifère, telle que l'ilménite; il s'agit des sels d'aluminium, vanadium, chrome et manganèse notamment.

La teneur du fer, principalement à l'état ferreux, est généralement comprise dans la gamme de 5 à 100 g/l et celle du titane entre 1 et 20 g/l.

La présence d'un ou de plusieurs de ces sels métalliques précités dans l'acide aqueux résiduaire risque, bien sûr, de poser des problèmes pour son rejet dans un fleuve ou dans la mer.

Il peut donc être nécessaire de récupérer de tels acides résiduaires, cette récupération étant par ailleurs avantageuse, puisque, dans le cas notamment de la fabrication du dioxyde de titane, ces acides peuvent représenter 33% de l'acide mis en œuvre pour l'attaque du minerai.

Cependant, l'opération de concentration d'un acide résiduaire pour sa réutilisation à l'attaque de l'ilménite par exemple ($H_2SO_4$ à 65%) est fortement gênée du fait de la précipitation des impuretés, ce qui entraîne un encrassement des évaporateurs.

Par ailleurs, il s'avère aussi intéressant de récupérer le titane contenu dans l'acide résiduaire. En effet, dans le cas de la production du dioxyde de titane, les eaux résiduaires peuvent contenir une part non négligeable de cette production. Par exemple, pour une usine produisant 180 t/jour de $TiO_2$, on en rejette à la mer entre 5 et 25 t/jour contenus dans les eaux résiduaires.

On connaît plusieurs procédés de traitement de solutions acides contenant des impuretés métalliques par extraction par des solvants organiques tels que des amines et des esters neutres de l'acide phosphorique.

C'est ainsi qu'on connaît par le brevet français N° 1.322.201 un procédé dans lequel on attaque une matière titanifère avec l'acide chlorhydrique ou sulfurique pour former une liqueur d'épuisement aqueuse acide. On traite cette liqueur soit avec un phosphate de trialcoyle soit avec un orthophosphate de mono ou dialcoyle. On extrait dans le premier cas le fer en laissant le titane, dans le deuxième cas le titane avec une quantité non négligeable de fer. On n'obtient en aucun cas une extraction conjointe du titane et des ions sulfate.

On connaît aussi un procédé d'extraction à partir d'un acide sulfurique résiduaire provenant d'une fabrication de $TiO_2$ (article des CHEMICAL ABSTRACTS Vol. 90 – 1979 – page 350 – N° 174062v) dans lequel on utilise l'acide méthyl-iso-octylphosphinique. Toutefois un tel solvant ne permet que l'extraction du titane de la phase aqueuse, l'acide sulfurique restant dans cette phase.

Il n'a donc pas été trouvé jusqu'à présent de procédé permettant d'obtenir à la fois la purification de la solution résiduaire et la récupération du titane. C'est donc l'objet de la présente invention que de procurer un procédé réalisant cette double fonction.

Dans ce but, le procédé de l'invention, pour le traitement d'une phase aqueuse acide comprenant des ions sulfate, notamment de l'acide sulfurique, des ions titane, notamment titane (IV) et des ions fer, notamment fer (II), est caractérisé en ce que l'on met en contact ladite phase aqueuse avec une phase organique initiale contenant au moins un extractant choisi dans le groupe de produits du type oxydes de phosphine, phosphonates ou phosphinates et de formule:

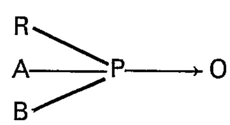

dans laquelle:

A et B sont des groupements $R_1$ ou $OR_2$, A et B pouvant être identiques ou différents, et $R_1$ et $R_2$ sont des radicaux alkyle, linéaires ou ramifiés, alcényle, alcynyle, alcoxy-alkyle, aryle, alkyl-aryle, ces radicaux pouvant être substitués par des halogènes; et

– soit R est un radical du même type que ceux définis ci-dessus pour $R_1$ et $R_2$; R, $R_1$ et $R_2$ étant identiques ou différents;

– soit R est un groupement

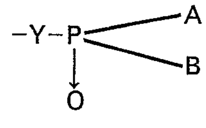

dans lequel Y est un groupement alkylène, linéaire ou ramifié, de préférence comportant 1 à 12 atomes de carbone; A et B étant tels que définis précédemment; puis on récupère une phase aqueuse finale comprenant subtantiellement tous les ions Fe(II) présents dans la phase aqueuse initiale et une phase organique finale comprenant substantiellement tout l'acide sulfurique et tous les ons titane présents dans la phase aqueuse initiale.

L'application spécifique des extractants du procédé de l'invention permet donc, d'une manière

avantageuse, d'extraire simultanément l'acide sulfurique et le titane et de les séparer des impuretés métalliques, en particulier du fer(II).

D'autres caractéristiques et avantages de l'invention seront mieux compris à la lecture de la description qui va suivre et d'exemples concrets mais non limitatifs de mise en œuvre du procédé.

La phase aqueuse initiale est donc une phase acide comprenant des ions sulfate, notamment de l'acide sulfurique, des ions titane, notamment titane (IV) et des ions fer, notamment Fe(II). Cette phase aqueuse peut être une phase acide résiduaire provenant d'un procédé mettant en œuvre l'acide sulfurique.

D'une manière générale, et notamment dans le cas d'une phase acide résiduaire d'un procédé de fabrication de $TiO_2$ à partir de l'ilménite, cette phase peut présenter une concentration en acide sulfurique comprise entre environ 10% et 50% en poids et, plus particulièrement, de 20% à 40%.

La teneur en titane peut être généralement comprise entre 1 et 20 g/l environ et notamment entre 3 et 15 g/l.

La teneur en sulfate de fer, principalement sulfate ferreux, exprimée en fer, est normalement comprise dans la gamme de 5 à 100 g/l environ et, en particulier, de 10 à 70 g/l.

En outre, comme cela a été vu plus haut, la phase aqueuse initiale peut contenir des ions métalliques d'au moins un des éléments suivants: aluminium, chrome, manganèse, calcium, vanadium.

On peut citer en outre d'autres éléments comme le zinc, le cuivre, le magnésium, le nickel, le plomb ou l'arsenic qui sont cependant en quantité moindre, notamment dans le cas de solutions acides résiduaires provenant d'un procédé d'attaque de l'ilménite.

La solution aqueuse acide initiale peut éventuellement subir, avant le traitement de l'invention, une préconcentration avec séparation des sulfates, notamment du sulfate ferreux, qui auront cristallisé.

La solution organique initiale comprend au moins un extractant du type mentionné plus haut, les extractants pouvant bien sûr être mélangés les uns avec les autres.

Ces extractants sont des composés organophosphorés à oxygène atome donneur neutre. Ils peuvent être du type phosphonate tels que par exemple le dibutyl butyl phosphonate (DBBP), le di-éthyl-2 hexyl (éthyl-2 hexyl) phosphonate (DHEHP), le bis (β-chloroéthyl) vinyl phosphonate, le tétra-éthyl décylène diphosphonate $(C_2H_5O)_2$ $OP-CH_2-(CH_2)_8-CH_2-PO(OC_2H_5)_2$, le tétra-éthyl butylène diphosphonate $(C_2H_5O)_2$ $OP-CH_2-(CH_2)_2-CH_2-PO(OC_2H_5)_2$, le tétra-isopropyl méthyl méthylène diphosphonate $(iC_3H_7O)_2OP-CH(CH_3)-PO(iC_3H_7O)$.

Ils peuvent être aussi du type phosphinate tel que par exemple le dioctylméthylphosphinate.

Ces extractants peuvent aussi être des oxydes de phosphine comme par exemple les oxydes de di-n-hexylméthoxyoctylphosphine (DHMOPO), de tri-n-butyl phosphine (TBPO), de trioctylphosphine (TOPO).

Il est avantageux dans certains cas, d'utiliser une phase organique qui comprend au moins un extractant du type précité en solution dans un diluant.

En effet, du fait de leurs propriétés physiques notamment, certains extractants ne peuvent pas être utilisés à l'état pur à l'extraction de la phase aqueuse initiale. Dans un tel cas, le diluant, outre son action solubilisante, a une action favorable sur les propriétés physiques du ou des extractants en diminuant par exemple la viscosité ou la densité de la phase organique.

Comme diluant, on peut utiliser seul ou en mélanges des composés tels que les hydrocarbures aromatiques ou aliphatiques, les alcools, les acides organiques, les éthers, les solvants halogénés, les cétones, les alkylphosphates.

La concentration du ou des extractants dans le diluant peut être comprise entre 10 et 90% en poids environ. Cette concentration est fonction notamment des propriétés physiques que l'on souhaite obtenir pour la phase organique initiale.

La température à laquelle se fait la mise en contact des phases aqueuse et organique initiales ne semble pas critique. Cette température peut être imposée par le procédé qui donne lieu à la phase aqueuse résiduaire à traiter. Elle peut aussi dépendre de la nature de l'extractant utilisé. En pratique, cette température ira de l'ambiante à 80° C environ.

La mise en contact entre les deux phases précitées et l'extraction se fait d'une manière connue dans un appareillage du type mélangeur-décanteur ou colonne par exemple.

Avantageusement, l'extraction est réalisée en continu et à contre-courant sur plusieurs étages.

Après la mise en contact, on obtient une phase aqueuse finale comprenant substantiellement tous les ions Fe(II) présents dans la phase aqueuse initiale et, éventuellement, substantiellement tous les ions d'autres impuretés métalliques, telles que l'aluminium, le chrome, le manganèse et le calcium, lorsque ces éléments sont présents dans la phase aqueuse acide initiale.

La phase organique contient substantiellement tout l'acide sulfurique et tous les ions titane présents dans la phase aqueuse initiale et qui en ont été extraits sélectivement.

On notera que le procédé de l'invention permet aussi d'extraire sélectivement de la phase aqueuse initiale résiduaire, lorsque celle-ci les contient, une partie substantielle d'éléments ayant une grande valeur économique, comme par exemple le vanadium.

La phase organique finale pourra ensuite être traitée suivant tout moyen connu, par exemple par réextraction à l'eau, pour récupérer les différents éléments qu'elle contient, notamment l'acide sulfurique et le titane.

Des exemples concrets de mise en œuvre de l'invention vont maintenant être donnés.

*Exemple 1:*

On obtient comme sous-produit du procédé de production du dioxyde de titane par attaque de l'ilménite par $H_2SO_4$ à 65% en poids, une solution

résiduaire qui après une préconcentration a la composition suivante:

| | |
|---|---|
| $H_2SO_4$ | 523 g/l (38% en poids) |
| $SO_4^{2-}$ | 568 g/l |
| $Cl^-$ | 1,13 g/l |
| Fe | 25,8 g/l |
| Ti | 9,12 g/l |
| Al | 4,02 g/l |
| Mn | 4,57 g/l |
| Cr | 272 mg/l |
| V | 751 mg/l |
| Zn | 86 mg/l |
| Cu | 76 mg/l |
| Ca | 435 mg/l |
| Mg | 81 mg/l |
| Ni | 3,9 mg/l |
| Pb | 6,2 mg/l |
| As | 0,4 mg/l |

On réalise une exctraction avec différents composés organophosphorés de la famille des oxydes de phosphine, des phosphonates et des phosphinates. Ils sont utilisés purs.

L'opération est réalisée à 25° C (sauf pour le TOPO et le TBPO). On agite 1 l de solution d'acide résiduaire avec 1 l de solvant organique. Après décantation et séparation, l'analyse des diverses phases aqueuses et organiques permet de calculer les taux d'élimination de l'acide sulfurique et du titane de la phase aqueuse.

Ces différents résultats sont rassemblés dans le tableau 1. Pour le TOPO et le TBPO, les températures indiquées sont celles auxquelles on a opéré.

*Tableau 1*

| $H_2SO_4$ | | | |
|---|---|---|---|
| Solvants | Conc. initiale phase aqueuse | Conc. phase aqueuse après extraction | Taux d'élimination |
| DBBP | 523 g/l | 397 g/l | 24% |
| DHMOPO | » | 402 g/l | 23% |
| Bis (β-chloroéthyl vinyl phosphonate) | » | 365 g/l | 30% |
| TBPO 70° C | » | 293 g/l | 56% |
| TOPO 50° C | » | 392 g/l | 25% |
| DEHEHP | » | 443 g/l | 15% |
| TBP (tri-n-butyl phosphate) | » | 408 g/l | 22% |
| Dioctylméthylphosphinate | » | 345 g/l | 34% |

| Titane | | | |
|---|---|---|---|
| Solvants | Conc. initiale | Conc. finale | Taux d'élimination |
| DBBP | 9,12 g/l | 4,98 | 45% |
| DHMOPO | » | 1,27 | 86% |
| Bis (β-chloroéthyl vinyl phosphonate) | » | 7,38 | 19% |
| TBPO | » | 1,38 | 84% |
| TOPO | » | 0,85 | 91% |
| DEHEHP | » | 1,57 | 83% |
| TBP | » | 9,05 | $<$ 1% |
| Dioctylméthylphosphinate | » | 0,7 | 92% |

| Fer | | | |
|---|---|---|---|
| Solvants | Conc. initiale | Conc. finale | Taux d'élimination |
| DBBP | 25,6 g/l | 24,05 g/l | 6% |
| DEHEHP | » | 24,75 g/l | 3% |
| DHMOPO | » | » | $<$5% |
| Bis (β-chloroéthyl vinyl phosphonate) | » | » | |
| TBPO, TOPO | » | » | |
| Dioctylméthylphosphinate | » | » | |

*Exemple 2:*

On utilise une phase aqueuse, de même composition que celle de l'exemple 1.

1 l de cet acide résiduaire est mis en contact avec 1 l de différents composés organophosphorés neutres. Ces derniers sont utilisés soit mélangés entre eux, soit dilués dans un diluant organique. L'extraction est réalisée à 25° C.

L'analyse des différentes phases aqueuses et organiques permet de déterminer les taux d'élimina-

tion de $H_2SO_4$ et Ti présents initialement en phase aqueuse. Les résultats sont regroupés dans le tableau 2. Les proportions indiquées pour le mélange sont en poids.

*Tableau 2*

| Solvants | Taux d'élimination | |
|---|---|---|
| | $H_2SO_4$ | Ti |
| 50% DBBP – 50% DHMOPO | 27% | 87% |
| 80% – 20% DHMOPO | 27% | 85% |
| TOPO 35%, Décanol 45%, kérosène 20% | 18% | 82% |
| TOPO 10%, DHMOPO 70%, kérosène 20% | 21% | 97% |
| TOPO 35%, Acide Versatic* 25%, kérosène 40% | 8% | 81% |
| TOPO 35%, Méthyl isobutyl cétone 65% | 14% | 74% |
| TOPO 10%, DBBP 90% | 27% | 88% |

* Produit commercialisé par la société Shell correspondant à un mélange d'isomère de l'acide décanoïque.

*Exemple 3:*

On utilise deux solutions d'acides sulfuriques impurs, provenant du procédé au sulfate de production du titane. L'échantillon A a la composition type des eaux mères, alors que l'échantillon B est un acide ayant subi une préconcentration avec cristallisation du sulfate ferreux que l'on a séparé.

| Echantillon A | Echantillon B |
|---|---|
| $H_2SO_4$ 268 g/l (23%) | $H_2SO_4$ 523 g/l (38%) |
| Fe 48,4 g/l | Fe 25,8 g/l |
| Ti 4,26 g/l | Ti 9,12 g/l |

On réalise avec chacun de ces échantillons une série de 10 contacts successifs en ampoules avec des fractions de dibutylbutylphosphonate. L'opération est réalisée à 25° C.

On procède ensuite de la même manière mais avec, comme solvant, le TBP.

Pour l'échantillon A, le DBBP conduit à un raffinat contenant 5% d'$H_2SO_4$ en poids, le TBP à un raffinat avec 10,5% d'$H_2SO_4$.

Pour l'échantillon B, le DBBP conduit à un raffinat contenant 5% d'$H_2SO_4$ en poids, le TBP à un raffinat à 13% d'$H_2SO_4$.

On voit donc que l'on extrait avec beaucoup plus d'efficacité l'acide sulfurique avec le DBBP qu'avec le TBP.

*Exemple 4:*

On considère l'acide résiduaire de l'exemple 1.

On réalise une extraction en continu avec du DBBP, sur 6 étages théoriques à contre-courant, avec un rapport des débits volumiques phase organique/phase aqueuse voisin de 3. La température est fixée à 25° C.

La phase organique est alors soumise à une réextraction à l'eau sur 6 étages théoriques avec un rapport de débit volumique O/A de 3.

Le tableau 3 donne la composition du raffinat obtenu après extraction par la phase organique et le taux d'extraction.

On constate une récupération de 91% pour $H_2SO_4$ et 92% pour le titane dans la phase organique. D'autre part, les autres impuretés métalliques: fer, aluminium, manganèse, calcium, chrome, restent en majorité dans le raffinat.

Par ailleurs, on notera qu'un élément intéressant économiquement, le vanadium, est extrait et est récupéré d'une manière substantielle.

*Tableau 3*

| Composition | Acide impur initial | Raffinat | Taux d'extraction |
|---|---|---|---|
| $H_2SO_4$ | 523 g/l | 78 g/l | 91% |
| Fe | 25,8 g/l | 24,7 g/l | 5% |
| Ti | 9,12 g/l | 0,9 g/l | 92% |
| Al | 4,02 g/l | 5,6 g/l | < 1% |
| Mn | 4,57 g/l | 5,6 g/l | 8% |
| Cr | 272 mg/l | 330 mg/l | 3% |
| V | 751 mg/l | 700 mg/l | 27% |
| Ca | 435 mg/l | 520 mg/l | 3% |

Bien entendu, l'invention n'est nullement limitée aux modes de réalisation décrits qui n'ont été donnés qu'à titre d'exemple.

## Patentansprüche

1. Verfahren zur Behandlung einer sauren wässerigen Phase, die Sulfationen, insbesondere Schwefelsäure, Titanionen, insbesondere Titan (IV), und Eisenionen, insbesondere Eisen (II) enthält, dadurch gekennzeichnet, dass man die genannte wässerige Phase mit einer ursprünglichen organischen Phase in Kontakt bringt, die wenigstens ein Extraktionsmittel enthält, das aus der Gruppe von Produkten des Typs Phosphinoxid, Phosphonate oder Phosphinate der Formel ausgewählt ist:

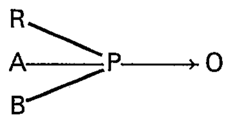

in der

A und B Gruppen $R_1$ oder $OR_2$ bedeuten, wobei A und B gleich oder verschieden sein können, und $R_1$ und $R_2$ geradlinige oder verzweigte Alkylradikale, Alkenyle, Alkinyle, Alkoxy-Alkyle, Aryle, Alkylaryle sind, die durch Halogene substituiert sein können;

R kann entweder ein Radikal des gleichen Typs wie oben für $R_1$ und $R_2$ definiert, wobei R, $R_1$ und $R_2$ gleich oder verschieden sein können, sein oder eine Gruppe

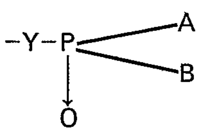

in der Y eine lineare oder verzweigte Alkylengruppe mit vorzugsweise 1 bis 12 Kohlenstoffatomen ist; A und B besitzen die oben definierte Bedeutung; danach erhält man eine wässerige Endphase, die im wesentlichen alle in der wässerigen Anfangsphase Vorhandenen Eisen(II)-Ionen enthält und eine organische Endphase, die im wesentlichen die ganze Schwefelsäure und alle Titan-Ionen enthält, die in der wässerigen Anfangsphase vorhanden waren.

2. Verfahren nach Anspruch 1, dadurch gekennzeichnet, dass die organische Anfangsphase wenigstens eines der oben genannten Extraktionsmittel in Lösung in einem Verdünnungsmittel enthält.

3. Verfahren nach Anspruch 2, dadurch gekennzeichnet, dass das Verdünnungsmittel wenigstens ein Glied der Gruppe der aromatischen oder aliphatischen Kohlenwasserstoffe, der Alkohole, der organischen Säuren, der Ether, der halogenierten Lösungsmittel, der Ketone oder der Alkylphosphate enthält.

4. Verfahren nach einem der beiden Anspruch 2 oder 3, dadurch gekennzeichnet, dass die Extraktionsmittelkonzentration in dem Verdünnungsmittel zwischen etwa 10 und 90 Gew.-% beträgt.

5. Verfahren nach einem der vorangehenden Ansprüche, dadurch gekennzeichnet, dass die organische Anfangsphase wenigstens ein Extraktionsmittel enthält, das unter den Phosphinoxiden wie Di-n-hexylmethoxyoctylphosphinoxid, Tri-n-butylphosphinoxid und Trioctylphosphinoxid ausgewählt ist.

6. Verfahren nach einem der Ansprüche 1 bis 4, dadurch gekennzeichnet, dass die organische Anfangsphase mindestens ein Extraktionsmittel enthält, das unter den Phosphonaten wie Dibutylbutylphosphonat, Diethyl-2-hexyl(ethyl-2-hexyl)-phosphonat und dem Bis-(β-chlorethyl)vinylphosphonat ausgewählt ist.

7. Verfahren nach einem der Ansprüche 1 bis 4, dadurch gekennzeichnet, dass die organische Anfangsphase mindestens ein Extraktionsmittel enthält, das unter den Phosphinaten wie dem Dioctylmethylphosphinat ausgewählt ist.

8. Verfahren nach einem der vorangehenden Ansprüche, dadurch gekennzeichnet, dass die organische Anfangsphase Dibutylbutylphosphonat im Gemisch mit Trioctylphosphinoxid oder Di-n-hexylmethoxyoctylphosphinoxid enthält.

9. Verfahren nach einem der Ansprüche 1 bis 7, dadurch gekennzeichnet, dass die organische Anfangsphase Trioctylphosphinoxid im Gemisch mit Methylisobutylketon oder mit Versatic-Säure und Kerosen, oder mit Decanol und Kerosen, oder mit Kerosen und Di-n-hexylmethoxyoctylphosphinoxid enthält.

10. Verfahren nach einem der vorangehenden Ansprüche, dadurch gekennzeichnet, das die wässerige Anfangsphase ausserdem Vanadiumionen enthält und dass man, nachdem die wässerige Phase mit der organischen Anfangsphase in Kontakt gebracht wurde, eine organische Endphase enthält, die einen wesentlichen Teil der in der wässerigen Anfangsphase enthaltenen Vanadiumionen enthält.

11. Verfahren nach einem der vorangehenden Ansprüche, dadurch gekennzeichnet, dass die wässerige Anfangsphase ausserdem Ionen von mindestens einem der folgenden Elemente enthält: Aluminium, Chrom, Mangan, Calcium, und dadurch, dass man, nachdem die wässerige Phase mit der organischen Anfangsphase in Kontakt gebracht wurde, eine wässerige Endphase enthält, die ausserdem im wesentlichen alle aufgeführten Ionen enthält.

12. Verfahren nach einem der vorangehenden Ansprüche, dadurch gekennzeichnet, dass man die wässerige und die organische Anfangsphase kontinuierlich im Gegenstrom miteinander in Kontakt bringt.

13. Verfahren nach einem der vorangehenden Ansprüche, dadurch gekennzeichnet, dass die saure wässerige Phase vor der Behandlung mit der organischen Phase konzentriert wird.

14. Verfahren nach einem der vorangehenden Ansprüche, dadurch gekennzeichnet, dass die organische Endphase mit Wasser reextrahiert wird zur Gewinnung der Schwefelsäure und des Titans.

15. Verfahren nach einem der vorangehenden Ansprüche, dadurch gekennzeichnet, dass die wässerige Anfangsphase eine Lösung von Rückstands-Schwefelsäure aus dem Produktionsprozess von Titandioxid ist.

## Claims

1. A process for treating an acid aqueous phase comprising sulphate ions, in particular sulphuric acid, titanium, in particular titanium (IV), ions and iron, in particular iron (II), ions, characterised in that said aqueous phase is brought into contact with an initial organic phase containing at least one extracting agent selected from the group comprising substances of the phosphine oxides, phosphonates or phosphinates type, of the following formula:

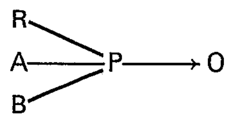

wherein:

A and B are groups $R_1$ or $OR_2$, in which A and B may be identical or different, and $R_1$ and $R_2$ are straight-chain or branched alkyl, alkenyl, alkynyl, alkoxy-alkyl, aryl and alkyl-aryl radicals, which radicals may be substituted by halogen, and

– either R is a radical of the same type as those defined hereinbefore in respect or $R_1$ and $R_2$; R, $R_1$ and $R_2$ being identical or different;

– or R is a group

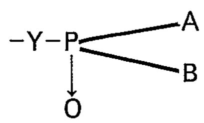

wherein Y is a straight-chain or branched alkylene group, preferably containing from 1 to 12 carbon atoms; A and B being as defined hereinbefore; then there are recovered a final aqueous phase containing substantially all the Fe(II) ions present in the initial aqueous phase and a final organic phase containing substantially all the sulphuric acid and all the titanium ions present in the initial aqueous phase.

2. A process according to Claim 1, characterised in that the initial organic phase contains at least one said extracting agent in solution in a diluent.

3. A process according to Claim 2, characterised in that the diluent comprises at least one member from the group comprising aromatic or aliphatic hydrocarbons, alcohols, organic acids, ethers, halogenated solvents, ketones and alkyl phosphates.

4. A process according to Claim 2 or Claim 3, characterised in that the concentration of said extracting agent or agents in the diluent is between 10 and 90% by weight approximately.

5. A process according to any one of the preceding claims, characterised in that the initial organic phase contains at least one extracting agent selected from phosphine oxides such as di-n-hexylmethoxyoctylphosphine oxides, tri-n-butyl phosphine oxide and trioctylphosphine oxide.

6. A process according to any one of Claims 1 to 4, characterised in that the initial organic phase contains at least one extracting agent selected from phosphonates such as dibutyl butyl phosphonate, di-2-ethylhexyl (2-ethylhexyl) phosphonate and bis-(β-chloroethyl)vinyl phosphonate.

7. A process according to any one of Claims 1 to 4, characterised in that the initial organic phase contains at least one extracting agent selected from phosphinates such as dioctylmethyl phosphinate.

8. A process according to any one of the preceding claims, characterised in that the initial organic phase comprises dibutyl butyl phosphonate mixed with trioctylphosphine oxide or di-n-hexylmethoxyoctyl phosphine oxide.

9. A process according to any one of Claims 1 to 7, characterised in that the initial organic phase comprises trioctyl phosphine oxide mixed with methylisobutyl ketone or with Versatic acid and kerosene or with decanol and kerosene or with kerosene and di-n-hexylmethoxyoctyl phosphine oxide.

10. A process according to any one of the preceding claims, characterised in that the initial aqueous phase further contains vanadium ions and that after contacting thereof with the initial organic phase, there is recovered a final organic phase comprising a substantial part of the vanadium ions present in the initial aqueous phase.

11. A process according to any one of the preceding claims, characterised in that the initial phase further contains ions of at least one of the following elements: aluminium, chromium, manganese and calcium and that after being brought into contact with the initial organic phase, there is recovered a final aqueous phase further containing substantially all said ions.

12. A process according to any one of the preceding claims, characterised in that said initial aqueous and organic phases are brought into contact continuously and in counter-flow mode.

13. A process according to any one of the preceding claims, characterised in that the acid aqueous phase is concentrated before the treatment with the organic phase.

14. A process according to any one of the preceding claims, characterised in that the final organic phase is re-extracted with water to recover the sulphuric acid and titanium.

15. A process according to any one of the preceding claims, characterised in that the initial aqueous phase is a solution of residual sulphuric acid originating from a titanium dioxide production process.

## Revendications

1. Procédé de traitement d'une phase aqueuse acide comprenant des ions sulfate, notamment de l'acide sulfurique des ions titane, notamment titane (IV) et des ions fer notamment fer(II), caractérisé en ce que l'on met en contact ladite phase aqueuse avec une phase organique initiale contenant au moins un extractant choisi dans le groupe de produits du type oxydes de phosphine, phosphonates ou phosphinates et de formule:

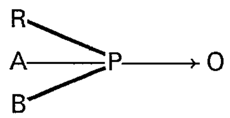

dans laquelle:

A et B sont des groupements $R_1$ ou $OR_2$, A et B pouvant être identiques ou différents, et $R_1$ et $R_2$ sont des radicaux alkyle, linéaires ou ramifiés, alcényle, alcoxy-alkyle, aryle, alkylaryle, ces radicaux pouvant être substitutés par des halogènes; et

– soit R est un radical du même type que ceux définis ci-dessus pour $R_1$ et $R_2$; R, $R_1$ et $R_2$ étant identiques ou différents;

– soit R est un groupement

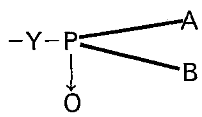

dans lequel:

Y est un groupement alkylène, linéaire ou ramifié, de préférence comportant 1 à 12 atomes de carbone, A et B étant tels que définis précédemment; puis on récupère une phase aqueuse finale comprenant substantiellement tous les ions Fe(II) présents dans la phase aqueuse initiale et une phase organique finale comprenant substantiellement tout l'acide sulfurique et tous les ions titane présents dans la phase aqueuse initiale.

2. Procédé selon la revendication 1, caractérisé en ce que la phase organique initiale comprend au moins un extractant précité en solution dans un diluant.

3. Procédé selon la revendication 2, caractérisé en ce que le diluant comprend au moins un membre du groupe comprenant les hydrocarbures aromatiques ou aliphatiques, les alcools, les acides organiques, les éthers, les solvants halogénés, les cétones, les alkylphosphates.

4. Procédé selon l'une des revendications 2 ou 3, caractérisé en ce que la concentration du ou des extractants précités dans le diluant est compris entre 10 et 90% en poids environ.

5. Procédé selon l'une des revendications précédentes, caractérisé en ce que la phase organique initiale contient au moins un extractant choisi parmi les oxydes de phosphine tels que les oxydes de di-n-hexylméthoxyoctylphosphine, l'oxyde de tri-n-butyl phosphine, l'oxyde de trioctylphosphine.

6. Procédé selon l'une des revendications 1 à 4, caractérisé en ce que la phase organique initiale contient au moins un extractant choisi parmi les phosphonates tels que le dibutylbutyl phosphonate, le di-éthyl-2 hexyl (éthyl-2 hexyl) phosphonate, le bis-(β-chloroéthyl) vinyl phosphonate.

7. Procédé selon l'une des revendications 1 à 4, caractérisé en ce que la phase organique initiale contient au moins un extractant choisi parmi les phosphinates tels que le dioctylméthyl phosphinate.

8. Procédé selon l'une des revendications précédentes, caractérisé en ce que la phase organique initiale comprend du dibutylphosphonate, en mélange avec de l'oxyde de trioctylphosphine ou de di-n-hexylméthoxyoctylphosphine.

9. Procédé selon l'une des revendications 1 à 7, caractérisé en ce que la phase organique initiale comprend de l'oxyde de trioctylphosphine, en mélange avec la méthylisobutylcétone, ou avec de l'acide Versatic et du kérosène, ou avec du décanol et du kérosène, ou avec du kérosène et de l'oxyde de di-n-hexylméthoxyoctylphosphine.

10. Procédé selon l'une des revendications précédentes, caractérisé en ce que la phase aqueuse initiale contient en outre des ions vanadium et en ce qu'après la mise en contact avec la phase organique initiale, on récupère une phase organique finale comprenant une partie substantielle des ions vanadium présents dans la phase aqueuse initiale.

11. Procédé selon l'une des revendications précédentes, caractérisé en ce que la phase initiale contient en outre des ions d'au moins un des éléments suivants: aluminium, chrome, manganèse, calcium et en ce qu'après la mise en contact avec la phase organique initiale, on récupère une phase aqueuse finale comprenant en outre, substantiellement, tous les ions précités.

12. Procédé selon l'une des revendications précédentes, caractérisé en ce que l'on met en contact les phases aqueuse et organique initiales en continu et à contre-courant.

13. Procédé selon l'une des revendications précédentes, caractérisé en ce que la phase aqueuse acide est concentrée avant le traitement par la phase organique.

14. Procédé selon l'une des revendications précédentes, caractérisé en ce que la phase organique finale est réextraite à l'eau pour récupérer de l'acide sulfurique et le titane.

15. Procédé selon l'une des revendications précédentes, caractérisé en ce que la phase aqueuse initiale est une solution d'acide sulfurique résiduaire, provenant d'un procédé de production de dioxyde de titane.